# EUROPEAN PATENT APPLICATION

(11) **EP 4 195 736 A1**
(43) Date of publication of application: **14.06.2023**
(21) Application number: 20948270.2
(22) Date of filing: 06.08.2020
(51) Int. Cl.: H04W 16/28, H04W 24/10

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2020/030268
(87) International publication number: WO 2022/029978

(57) **Abstract**

A terminal according to one aspect of the present disclosure includes a receiving section that receives a report setting associated with a plurality of channel measurement resources and one or more interference measurement resources, the plurality of channel measurement resources being associated with a plurality of spatial domain filters, and a control section that performs measurement in the plurality of channel measurement resources and the one or more interference measurement resources. According to one aspect of the present disclosure, it is possible to appropriately perform measurement/reporting in a plurality of resources.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see

Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), a user terminal (terminal, User Equipment (UE)) that measures/reports channel state information (CSI) is under study.

However, a method for measurement/reporting in a plurality of resources using a plurality of panels, a plurality of spatial domain filters, or the like is indefinite. Unless the method for the measurement/reporting is definite, degradation in quality of notification, throughput reduction, and the like may occur.

Thus, an object of the present disclosure is to provide a terminal, a radio communication method, and a base station that appropriately perform measurement/reporting in a plurality of resources.

### Solution to Problem

A terminal according to one aspect of the present disclosure includes a receiving section that receives a report setting associated with a plurality of channel measurement resources and one or more interference measurement resources, the plurality of channel measurement resources being associated with a plurality of spatial domain filters, and a control section that performs measurement in the plurality of channel measurement resources and the one or more interference measurement resources.

### Advantageous Effects of Invention

According to one aspect of the present disclosure, it is possible to appropriately perform measurement/reporting in a plurality of resources.

### Brief Description of Drawings

FIGS. 1A and 1B are each a diagram to show an example of a report setting in Rel. 16;
FIG. 2 is a diagram to show an example of an AP-CSI trigger state list in Rel. 16;
FIGS. 3A and 3B are diagrams to show an example of an association between resources and panels;
FIGS. 4A and 4B are diagrams to show another example of the association between resources and panels;
FIGS. 5A and 5B are each a diagram to show an example of a report setting in a first embodiment;
FIG. 6 is a diagram to show an example of a resource setting of configuration 2-1;
FIG. 7 is a diagram to show a concrete example of a report setting of configuration 2-1;
FIG. 8 is a diagram to show an example of CSI-associated report configuration information of configuration 2-1;
FIG. 9 is a diagram to show another concrete example of the report setting of configuration 2-1;
FIG. 10 is a diagram to show an example of a resource setting of configuration 2-2a;
FIG. 11 is a diagram to show a concrete example of a report setting of configuration 2-2a;
FIG. 12 is a diagram to show an example of CSI-associated report configuration information of configuration 2-2b;
FIG. 13 is a diagram to show a concrete example of the CSI-associated report configuration information of configuration 2-2b;
FIGS. 14A and 14B are each a diagram to show an example of a resource set in a third embodiment;
FIG. 15 is a diagram to show a concrete example of a report setting in the third embodiment;
FIG. 16 is a diagram to show an example of a report setting of configuration 4-1;
FIGS. 17A and 17B are each a diagram to show a concrete example of a report setting in a fourth embodiment;
FIG. 18 is a diagram to show an example of a schematic structure of a radio communication system according to one embodiment;
FIG. 19 is a diagram to show an example of a structure of a base station according to one embodiment;
FIG. 20 is a diagram to show an example of a structure of a user terminal according to one embodiment; and
FIG. 21 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS being in a relationship of QCL type X with a (DMRS for) given channel/signal, and this RS may be referred to as a QCL source of QCL type X in the TCI state.

### (CSI)

In NR, the UE measures a channel state by using a reference signal (or a resource for the reference signal), and feeds back (reports) channel state information (CSI) to a network (for example, a base station).

The UE may measure the channel state by using at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like.

A CSI-RS resource may include at least one of a non-zero power (NZP) CSI-RS resource, a zero power (ZP) CSI-RS resource, and a CSI interference measurement (CSI-IM) resource.

A resource for measuring a signal component for the CSI may be referred to as a signal measurement resource (SMR) or a channel measurement resource (CMR). The SMR (CMR) may include, for example, the NZP CSI-RS resource, SSB, and the like for channel measurement.

A resource for measuring an interference component for the CSI may be referred to as an interference measurement resource (IMR). The IMR may include, for example, at least one of the NZP CSI-RS resource, SSB, ZP CSI-RS resource, and CSI-IM resource for interference measurement.

The SS/PBCH block is a block including a synchronization signal (for example, a primary synchronization signal (PSS) or a secondary synchronization signal (SSS)) and a PBCH (and a corresponding DMRS), and may be referred to as an SS block (SSB) or the like.

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The CSI may have a plurality of parts. CSI part 1 may include information with a relatively small number of bits (for example, the RI). CSI part 2 may include information with a relatively large number of bits (for example, the CQI), such as information determined on the basis of CSI part 1.

The CSI may be classified into several CSI types. An information type, size, and the like to be reported may vary depending on the CSI type. For example, a CSI type configured for performing communication using a single beam (also referred to as type 1 (type I) CSI, CSI for a single beam, or the like), and a CSI type configured for performing communication using multiple beams (also referred to as type 2 (type II) CSI, CSI for multiple beams, or the like) may be defined. Usage of the CSI type is not limited to this.

As a method for feeding back the CSI, periodic CSI (P-CSI) reporting, aperiodic CSI (A-CSI, AP-CSI) reporting, semi-persistent CSI (SP-CSI) reporting, and the like are under study.

CSI measurement configuration information may be notified to the UE by using higher layer signaling, physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

The CSI measurement configuration information may be configured by using, for example, an RRC information element "CSI-MeasConfig." The CSI measurement configuration information may include CSI resource configuration information (an RRC information element "CSI-ResourceConfig"), CSI report configuration information (an RRC information element "CSI-ReportConfig"), and the like. The CSI resource configuration information relates to a resource for CSI measurement, and the CSI report configuration information relates to how the UE performs CSI reporting.

An RRC information element (or RRC parameter) related to CSI report configuration and CSI resource configuration will be described.

The CSI report configuration information ("CSI-ReportConfig") includes channel measurement resource information ("resourcesForChannelMeasurement"). The CSI report configuration information may also include interference measurement resource information (for example, interference measurement NZP CSI-RS resource information ("nzp-CSI-RS-ResourcesForInterference"), interference measurement CSI-IM resource information ("csi-IM-ResourcesForInterference"), and the like). These pieces of resource information correspond to CSI resource configuration information IDs (Identifiers) ("CSI-ResourceConfigId").

Note that one or a plurality of the CSI resource configuration information IDs (which may be referred to as CSI resource configuration IDs) corresponding to the respective pieces of resource information may be the same value, or may be different values.

The CSI resource configuration information ("CSI-ResourceConfig") may include a CSI resource configuration information ID, CSI-RS resource set list information ("csi-RS-ResourceSetList"), a resource type ("resourceType"), and the like. The CSI-RS resource set list may include at least one of information about an NZP CSI-RS and SSB for measurement ("nzp-CSI-RS-SSB") and CSI-IM resource set list information ("csi-IM-ResourceSetList").

The resource type represents behavior of this resource configuration in a time domain, and "aperiodic," "semi-persistent," and "periodic" can be configured for the resource type. For example, CSI-RSs corresponding to "aperiodic," "semi-persistent," and "periodic" may be referred to as an AP-CSI-RS (A-CSI-RS), an SP-CSI-RS, and a P-CSI-RS, respectively.

Note that the channel measurement resource may be used for, for example, calculation of the CQI, PMI, L1-RSRP, and the like. The interference measurement resource may be used for calculation of the L1-SINR, L1-SNR, L1-RSRQ, and another interference-related indicator.

### (Report Setting)

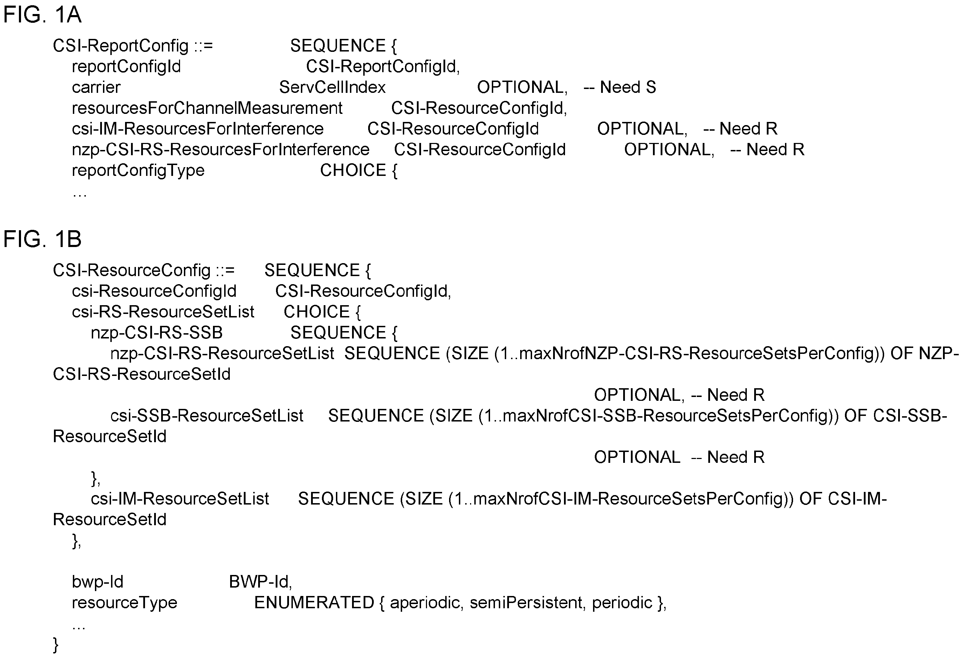

In Rel. 16, a resource setting for at least one of channel measurement and interference measurement is configured for a report setting (FIG. 1A). The report setting is configured by CSI report configuration (CSI-ReportConfig). The CSI report configuration includes a CSI resource configuration (CSI-ResourceConfig) ID for at least one of channel measurement and interference measurement. A channel measurement resource setting is configured by channel measurement resources (resourcesForChannelMeasurement). An interference measurement resource setting is configured by at least one of interference measurement CSI-IM resources (csi-IM-ResourcesForInterference) and interference measurement NZP-CSI-RS resources (nzp-CSI-RS-ResourcesForInterference). Each resource setting is configured by a CSI resource configuration ID (CSI-ResourceConfigId) .

In each resource setting, when the resource type (resourceType) is aperiodic (AP), a plurality of resource set IDs can be configured as a resource set list (csi-RS-ResourceSetList), and when the resource type is periodic (P)/semi-persistent (SP), one resource set (NZP-CSI-RS resource set) is configured as the resource set list (FIG. 1B). The resource set ID may be at least one of a non-zero power (NZP)-CSI-RS resource set ID, a CSI-SSB-resource set ID, and a CSI-IM resource set ID.

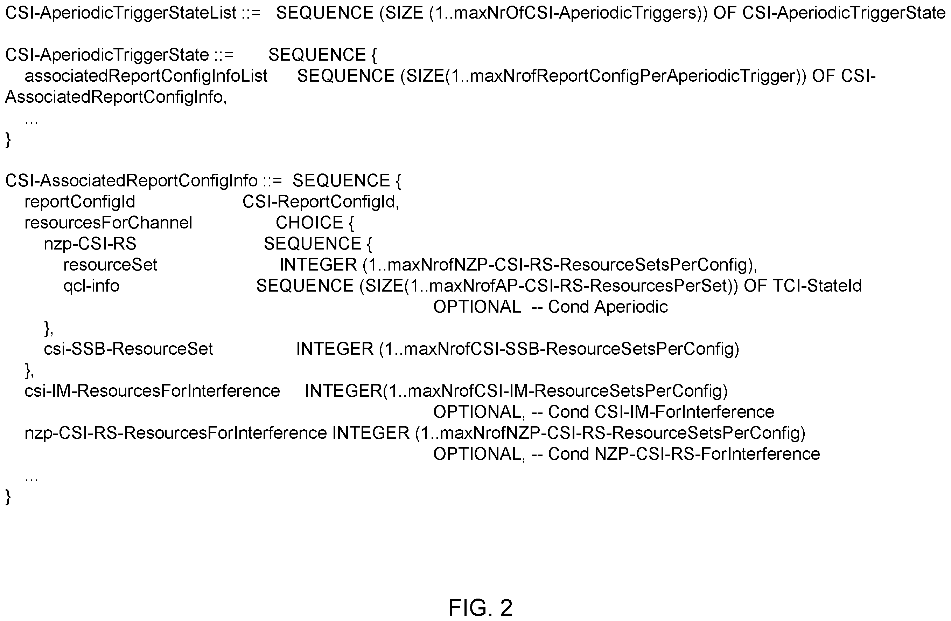

When the resource type is AP, in each CSI-aperiodic trigger state (CSI-AperiodicTriggerState) in CSI-aperiodic trigger state list (CSI-AperiodicTriggerStateList) configuration, one resource set (NZP-CSI-RS resource set) out of a plurality of resource sets is associated with a report configuration (CSI-ReportConfigId) (each piece of CSI-AssociateReportConfigInfo in associateReportConfigInfoList) (FIG. 2).

In order to mitigate a loss of UL coverage due to maximum permitted exposure (MPE), a function for prompting, on the basis of UL beam indication using a unified TCI framework for UL high-speed panel selection, a UE including (containing) a plurality of panels to perform UL beam selection is under study.

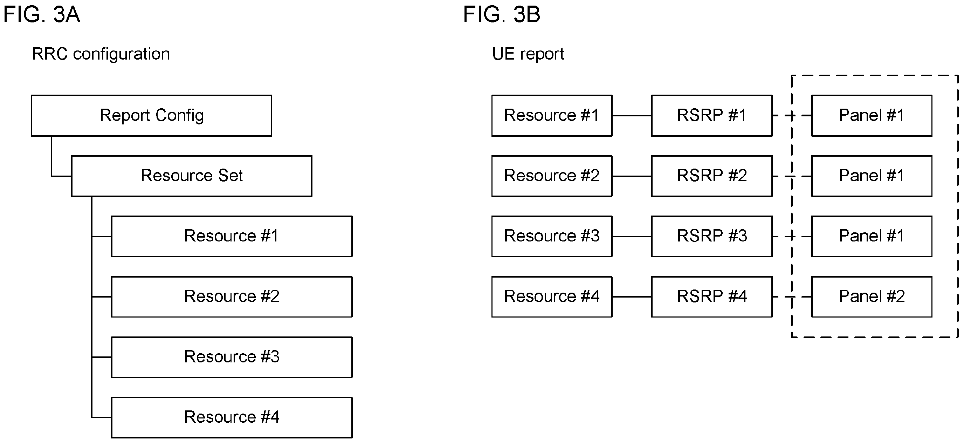

In RRC configuration for DL measurement/reporting in Rel. 15/16, a report configuration includes a resource set, and the resource set includes one or more resources (FIG. 3A). Each resource is associated with a measurement result (for example, RSRP) (FIG. 3B). Panels used for the DL measurement/reporting depend on UE implementation, and are not recognized by a gNB (transparent).

For Rel. 17 (or later versions), panel-specific DL measurement/reporting is under study in order to support dynamic panel switching controlled by the gNB.

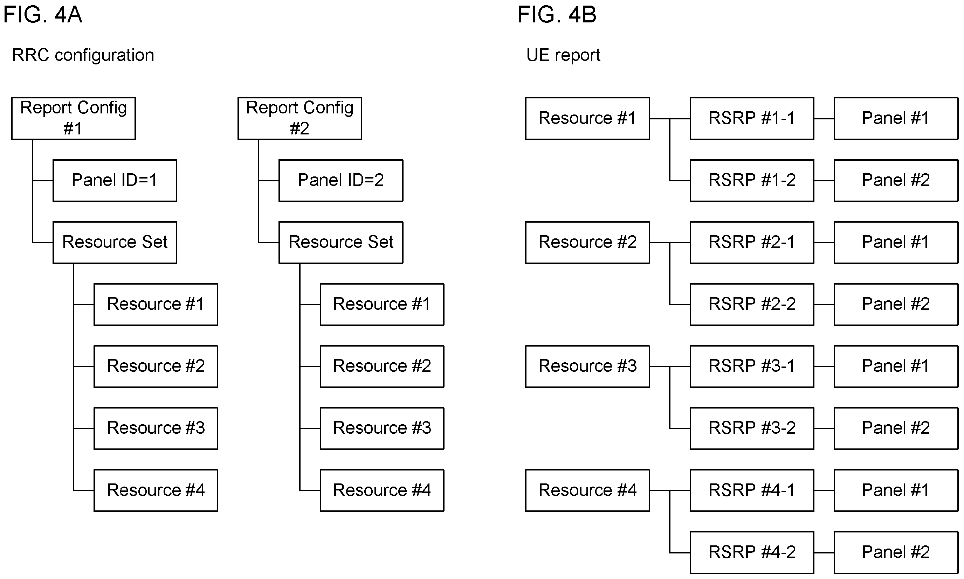

In order to support the panel-specific DL measurement/reporting, an explicit panel ID in CSI report configuration and an explicit panel ID in CSI reporting are under study. In an example of FIG. 4A, report configurations include panel IDs and resource sets. In an example of FIG. 4B, a report includes measurement results (for example, RSRP) and panel IDs.

However, when the panel-specific DL measurement/reporting is supported, it is preferable that an impact on specifications is suppressed. Overhead increase due to support of the panel-specific DL measurement/reporting may cause throughput reduction and the like.

Thus, the inventors of the present invention came up with the idea of a method for performing measurement/reporting in a plurality of resources by using a plurality of panels or a plurality of spatial domain filters.

Embodiments according to the present disclosure will be described in detail with reference to the drawings as follows. Structures described in aspects of respective embodiments may each be employed individually, or may be employed in combination.

In the present disclosure, "A/B" and "at least one of A and B" may be interchangeably interpreted. In the present disclosure, a cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, an RRC parameter, a higher layer parameter, an RRC information element (IE), and an RRC message may be interchangeably interpreted. In the present disclosure, "support," "control," "controllable," "operate," and "operable" may be interchangeably interpreted.

In the present disclosure, activation (activate), update, indication (indicate), enabling (enable), and specification (specify) may be interchangeably interpreted.

In the present disclosure, a MAC CE and an activation/deactivation command may be interchangeably interpreted.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

Note that in the present disclosure, a panel, an Uplink (UL) transmission entity, a transmission/reception point (TRP), spatial relation information, a spatial relation, a control resource set (CORESET), a PDSCH, a codeword, a base station, a given antenna port (for example, a demodulation reference signal (DMRS) port), a given antenna port group (for example, a DMRS port group), a given group (for example, a code division multiplexing (CDM) group, a given reference signal group, or a CORESET group), a CORESET pool, a spatial domain filter group, an RS group, and a group in group-based beam reporting may be interchangeably interpreted.

A panel Identifier (ID) and a panel may be interchangeably interpreted. In other words, a TRP ID and a TRP, a CORESET pool ID and a CORESET pool, and the like may be interchangeably respectively interpreted. An ID and an index may be interchangeably interpreted.

In the present disclosure, a beam, a spatial domain filter, a TCI state, QCL assumption, a QCL parameter, a spatial domain reception filter, a UE spatial domain reception filter, a UE receive beam, a DL beam, a DL receive beam, DL precoding, a DL precoder, a DL-RS, QCL type D in a TCI state, an RS of QCL type D in a TCI state, an RS of QCL type D in a TCI state or QCL assumption, an RS of QCL type A in a TCI state or QCL assumption, a spatial relation, a spatial domain transmission filter, a UE spatial domain transmission filter, a UE transmit beam, a UL beam, a UL transmit beam, UL precoding, and a UL precoder may be interchangeably interpreted. In the present disclosure, a QCL type X-RS, a DL-RS associated with QCL type X, and a DL-RS, a DL-RS source, an SSB, or a CSI-RS having QCL type X may be interchangeably interpreted.

In the present disclosure, a report setting, a report configuration (configuration), a CSI report setting, and a CSI report configuration may be interchangeably interpreted. In the present disclosure, a resource setting, a resource configuration (configuration), a CSI resource setting, and a CSI resource configuration may be interchangeably interpreted.

In the present disclosure, a description "-rXX" (for example, -r17) of the name of an information element indicates a 3GPP release number (for example, 3GPP Rel. 17). The description "-rXX" may be replaced with a description corresponding to another release number (for example, -r18, -r19, -r20, or the like), or may be omitted.

In the present disclosure, reception and measurement may be interchangeably interpreted.

In the present disclosure, "A includes B," "A is associated with B," and "A includes an ID of B" may be interchangeably interpreted.

### (Radio Communication Method)

In the present disclosure, a case that a plurality of resources are simultaneously received by a UE, a case that a plurality of resources are received by the UE by using a plurality of different panels, and a case that a plurality of resources are received by the UE by using a plurality of different spatial domain filters may be interchangeably interpreted. In the present disclosure, a case that a plurality of resources can be simultaneously received by a UE, a case that a plurality of resources can be simultaneously received by the UE by using a plurality of different spatial domain filters or a plurality of different panels, a case that it is assumed that the UE simultaneously receives a plurality of resources by using a plurality of different spatial domain filters or a plurality of different panels, a case that the plurality of resources are simultaneously transmitted by a base station (gNB or the like), and a case that the UE can receive a plurality of resources by using a plurality of different spatial domain filters may be interchangeably interpreted.

### <First Embodiment>

When a plurality of resource settings are configured for one same report setting, a plurality of resources in a plurality of different resource settings may be simultaneously received by a UE.

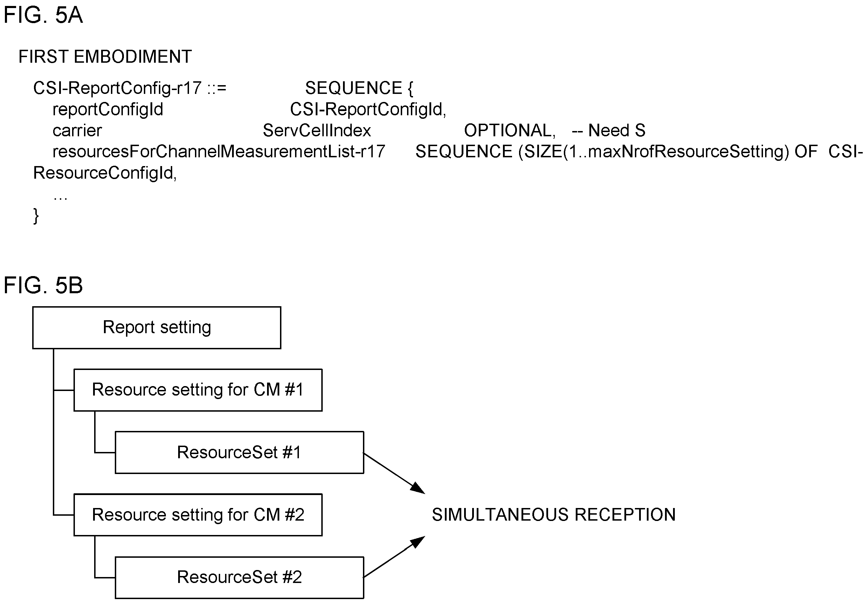

In each report setting (CSI-ReportConfig, CSI-ReportConfig-r17), a plurality of resource settings for channel measurement (CM) (CSI-ResourceConfig, CSI-ResourceConfigId, resourcesForChannelMeasurement, and a list of channel measurement resources (CMRs) (resourcesForChannelMeasurementList-r17)) may be configured (FIG. 5A).

A plurality of resources/resource sets of a CSI-RS/SSB in a plurality of different resource settings for channel measurement in one same report setting may be simultaneously received by the UE.

In an example of FIG. 5B, the report setting includes channel measurement resource setting #1 and channel measurement resource setting #2. Channel measurement resource setting #1 includes resource set #1, and channel measurement resource setting #2 includes resource set #2. The UE may simultaneously receive resource set #1 and resource set #2.

A maximum number of channel measurement resource settings in each report setting may be configured, may be defined in specifications, or may follow a capability reported by the UE. The maximum number may be regarded as the number of UE panels.

According to a first embodiment described above, the UE can appropriately perform measurement/reporting by using a plurality of UE panels corresponding to a plurality of resource settings.

### <<Variations>>

When a plurality of resource settings are configured for one same report setting, a plurality of resources in one same resource setting may be simultaneously received by the UE.

### <Second Embodiment>

As mentioned above, in each resource setting, when a resource type (resourceType) is aperiodic (AP), a plurality of resource sets (non-zero power (NZP)-CSI-RS resource sets) can be configured, and when the resource type is periodic (P)/semi-persistent (SP), one resource set (NZP-CSI-RS resource set) is configured. When the resource type is AP, in each CSI-aperiodic trigger state (CSI-AperiodicTriggerState) in CSI-aperiodic trigger state list (CSI-AperiodicTriggerStateList) configuration, one resource set (NZP-CSI-RS resource set) out of a plurality of resource sets is associated with a report configuration (CSI-ReportConfigId) (each piece of CSI-AssociateReportConfigInfo in associateReportConfigInfoList).

When a plurality of resource settings for P/SP are configured for one same report setting or when a plurality of resource settings for AP are associated with one same report setting, a plurality of resources in a plurality of different resource sets may be simultaneously received by a UE.

The resource setting may follow at least one of the following configuration 2-1 and configuration 2-2.

### <<Configuration 2-1>>

For the P/SP/AP resource type, configuration of a plurality of CSI-RS resource set lists (csi-RS-ResourceSetList) may be supported in CSI resource configuration (CSI-ResourceConfig).

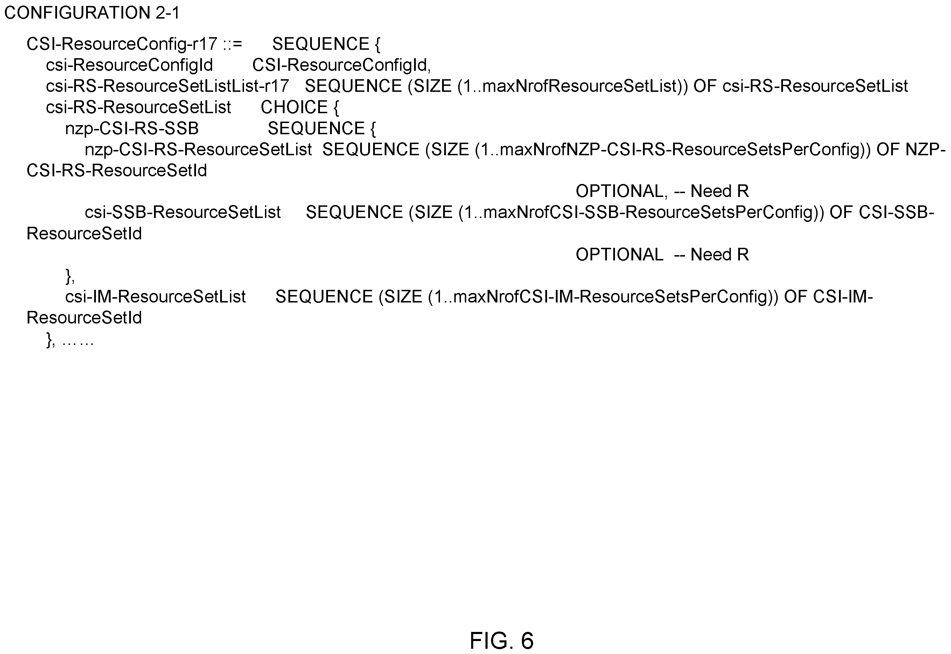

In each resource setting (CSI-ResourceConfig), a plurality of CSI-RS resource set lists (csi-RS-ResourceSetList) may be configured. The plurality of CSI-RS resource set lists may be configured as a list of CSI-RS resource set lists (csi-RS-ResourceSetListList) (FIG. 6).

A plurality of resources/resource sets of a CSI-RS/SSB in a plurality of different CSI resource set lists in one same resource setting may be simultaneously received by the UE.

A maximum number of CSI resource set lists in each resource setting may be configured, may be defined in specifications, or may follow a capability reported by the UE. The maximum number may be regarded as the number of UE panels.

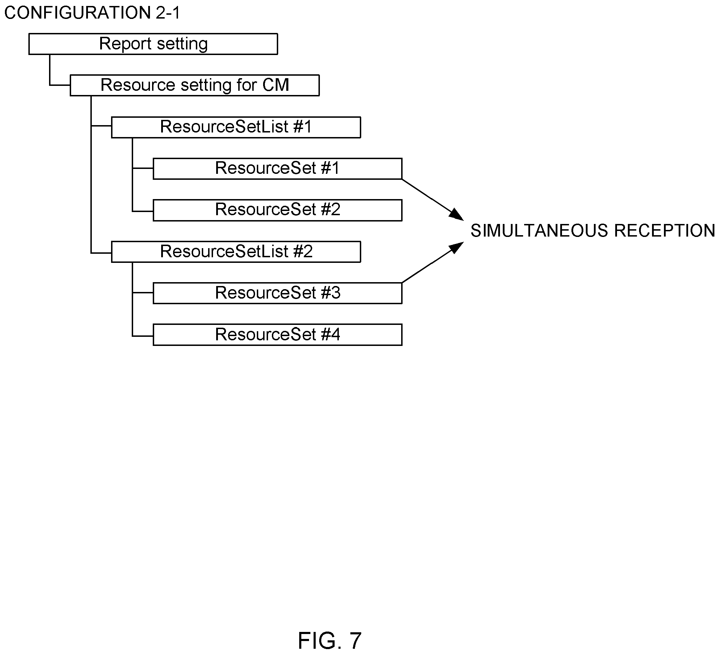

In an example of FIG. 7, the report setting includes one channel measurement resource setting. The channel measurement resource setting includes resource set list #1 and resource set list #2. Resource set list #1 includes resource set #1 and resource set #2, and resource set list #2 includes resource set #3 and resource set #4. The UE may simultaneously receive resource set #1 and resource set #3.

When the plurality of CSI-RS resource set lists are configured for the AP resource type, and a plurality of resource sets are associated with the report configuration by a corresponding entry in each CSI-RS resource set list, the corresponding entry being specified by configuration of a resource set (resourceSet) in CSI-associated report configuration information (CSI-AssociatedReportConfigInfo), the plurality of resource sets may be simultaneously received by the UE.

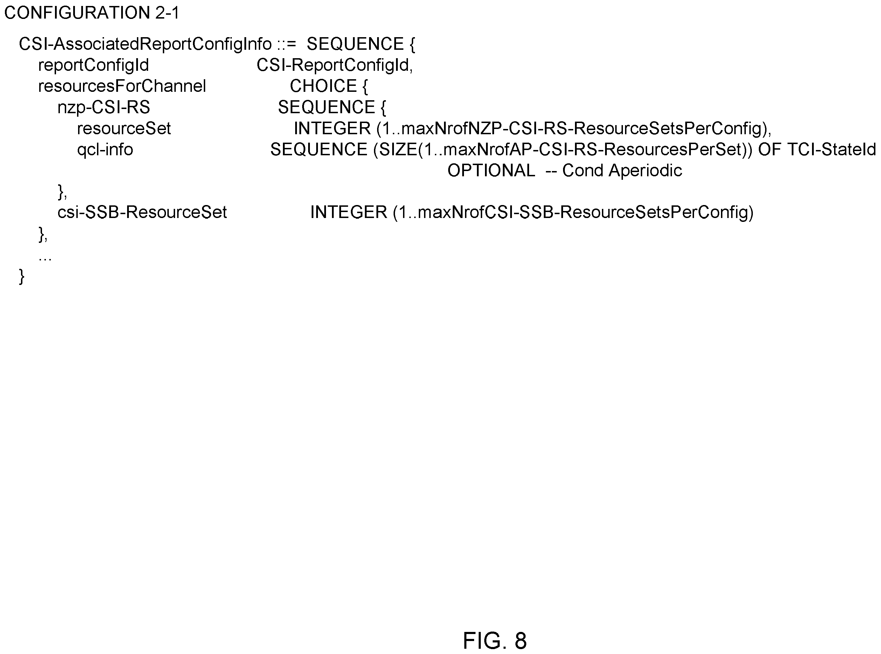

In an example of FIG. 8, CSI-AssociatedReportConfigInfo includes resourcesForChannel, and that resourcesForChannel includes one resourceSet.

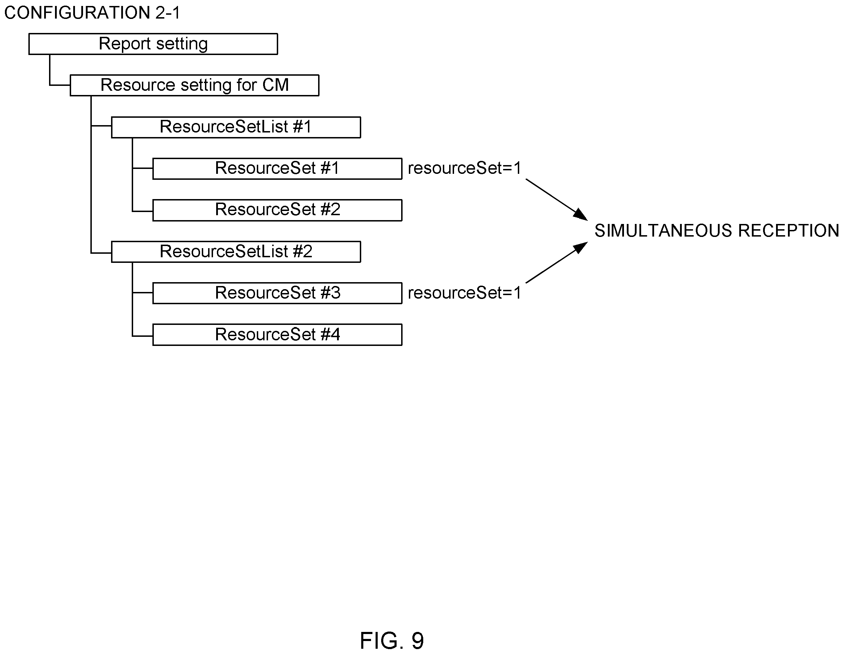

In an example of FIG. 9, the report setting includes one channel measurement resource setting. The channel measurement resource setting includes resource set list #1 and resource set list #2. Resource set list #1 includes resource set #1 and resource set #2, and resource set list #2 includes resource set #3 and resource set #4.

For example, when a plurality of CSI-RS resource set lists are configured in the resource setting, a value 1 of resourceSet corresponds to the first entry in each CSI-RS resource set list. In this example, when the resource set in the CSI-associated report configuration information is 1, the UE may simultaneously receive the first resource set #1 and resource set #3 in resource set list #1 and resource set list #2.

### <<Configuration 2-2>>

For the P/SP resource type, configuration of a plurality of resource sets in a plurality of CSI-RS resource set lists (csi-RS-ResourceSetList) and configuration of a plurality of resource sets in CSI-associated report configuration information (CSI-AssociatedReportConfigInfo) may be supported in CSI resource configuration (CSI-ResourceConfig).

The UE may follow at least one of the following configuration 2-2a and configuration 2-2b.

### [Configuration 2-2a]

In each resource setting, when the resource type is P/SP, a plurality of resource sets may be configured.

A plurality of resources of a CSI-RS/SSB in a plurality of different resource sets in one same resource setting may be simultaneously received by the UE.

A maximum number of resource sets in each resource setting in a case where the resource type is P/SP may be configured, may be defined in specifications, or may follow a capability reported by the UE. The maximum number may be regarded as the number of UE panels.

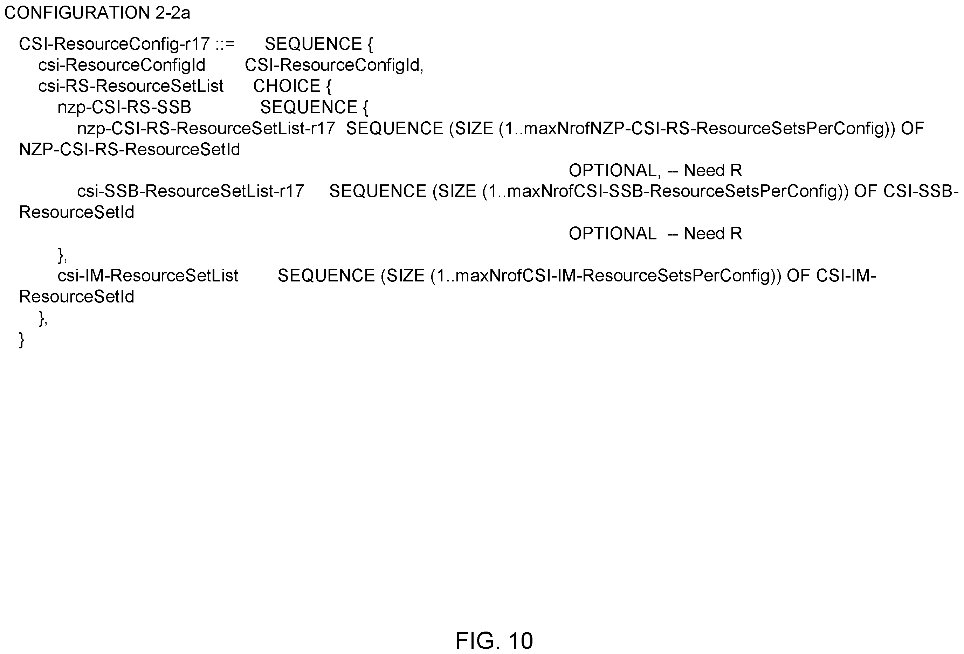

In an example of FIG. 10, CSI resource configuration (CSI-ResourceConfig-r17) includes a CSI-RS resource set list (csi-RS-ResourceSetList). csi-RS-ResourceSetList may include nzp-CSI-RS-ResourceSetList-r17, or may include csi-SSB-ResourceSetList-r17. nzp-CSI-RS-ResourceSetList-r17 may include one or more resource set IDs (NZP-CSI-RS-ResourceSetId). csi-SSB-ResourceSetList-r17 may include one or more resource set IDs (CSI-SSB-ResourceSetId).

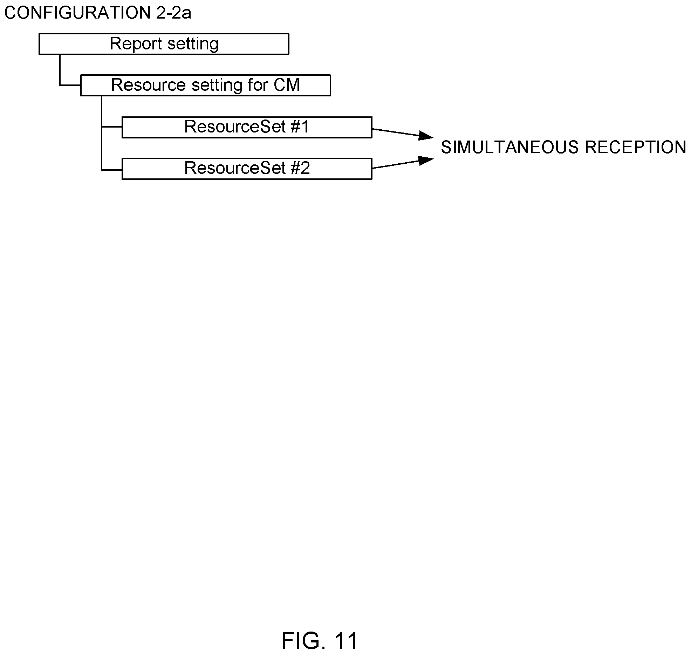

In an example of FIG. 11, the report setting includes one channel measurement resource setting. The channel measurement resource setting includes a P/SP resource type and a resource set list. The resource set list includes resource set #1 and resource set #2. The UE may simultaneously receive resource set #1 and resource set #2.

### [Configuration 2-2b]

When the resource type is AP, in the CSI-associated report configuration information, each resource setting may be associated with a plurality of resource sets for channel measurement. A plurality of resources of a CSI-RS/SSB in a plurality of different resource sets associated with one same report setting may be simultaneously received by the UE.

A maximum number of resource sets associated with one same report setting may be configured, may be defined in specifications, or may follow a capability reported by the UE. The maximum number may be regarded as the number of UE panels.

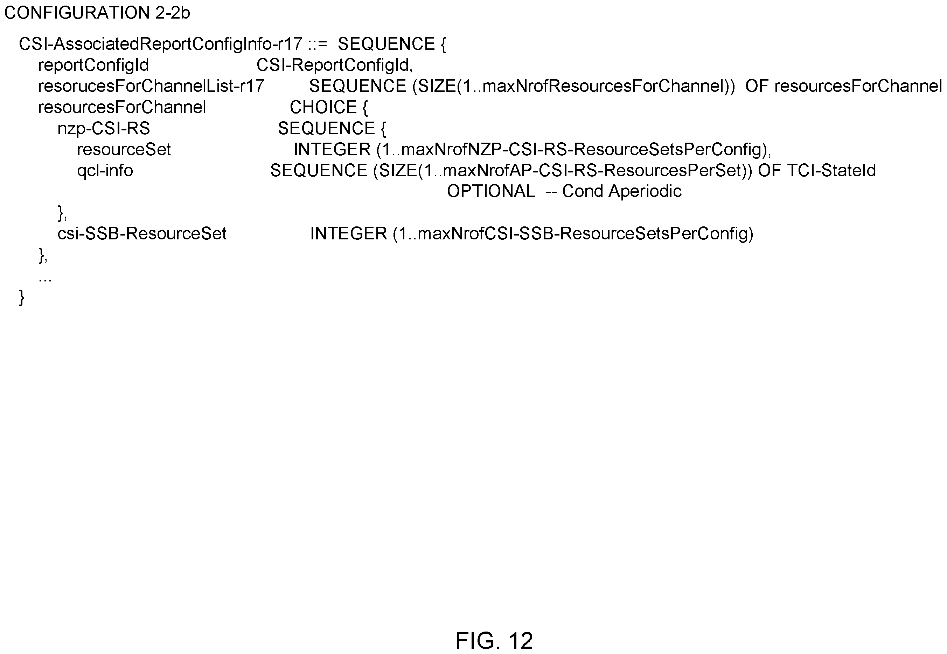

In an example of FIG. 12, CSI resource configuration (CSI-ResourceConfig-r17) includes a CSI-RS resource set list (csi-RS-ResourceSetList). csi-RS-ResourceSetList may include nzp-CSI-RS-ResourceSetList-r17, or may include csi-SSB-ResourceSetList-r17. nzp-CSI-RS-ResourceSetList-r17 may include one or more resource set IDs (NZP-CSI-RS-ResourceSetId). csi-SSB-ResourceSetList-r17 may include one or more resource set IDs (CSI-SSB-ResourceSetId).

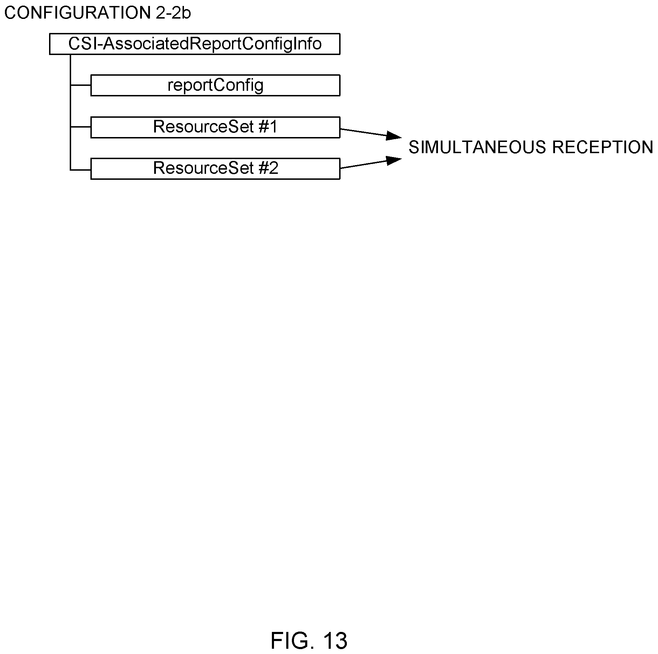

In an example of FIG. 13, the report setting includes one channel measurement resource setting. The channel measurement resource setting includes a P/SP resource type and a resource set list. The resource set list includes resource set #1 and resource set #2. The UE may simultaneously receive resource set #1 and resource set #2.

According to a second embodiment described above, the UE can appropriately perform measurement/reporting by using a plurality of UE panels corresponding to a plurality of resource sets.

### <<Variations>>

When a plurality of resource settings (periodic/semi-persistent) are configured for one same report setting or when a plurality of resource settings (aperiodic) are associated with one same report setting, a plurality of resources in one same resource setting may be simultaneously received by the UE.

### <Third Embodiment>

When a plurality of resource settings are configured for one same report setting, a plurality of resources in a plurality of different resource groups may be simultaneously received by a UE. The resource group may include one or more resources. The plurality of different resource groups may be included in one resource set.

In the present disclosure, a resource group, a group, resources, a pool, a list, a CSI resource group, a CSI-RS resource group, and an NZP-CSI-RS resource group may be interchangeably interpreted.

A plurality of groups of NZP-CSI-RS resources may be included in each resource set. A plurality of resources in a plurality of different groups in one same resource set may be simultaneously received by the UE.

A maximum number of groups in each resource set may be configured, may be defined in specifications, or may follow a capability reported by the UE. The maximum number may be regarded as the number of UE panels.

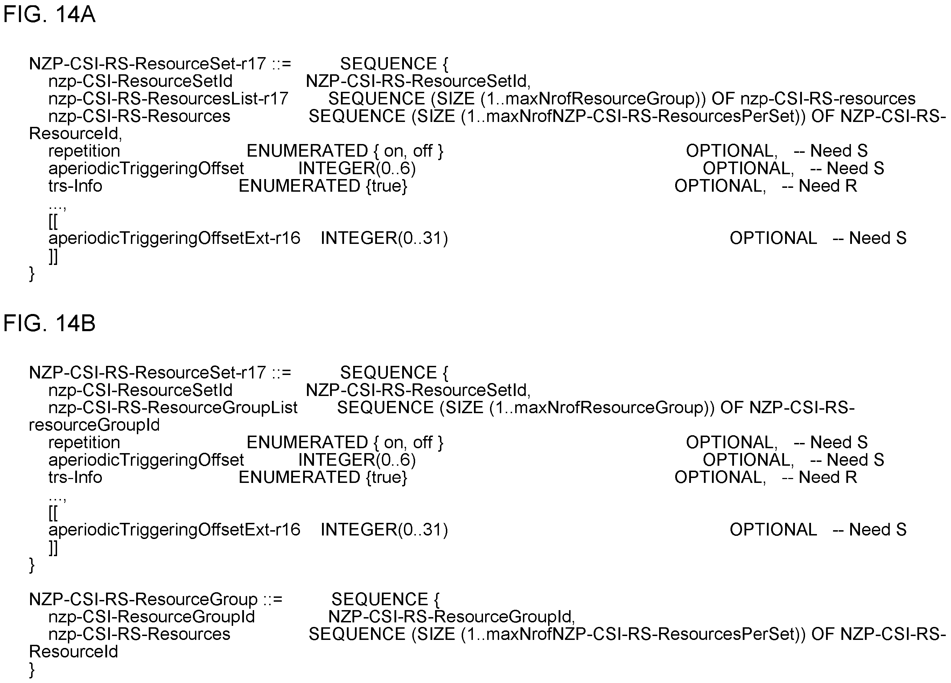

In an example of FIG. 14A, an NZP-CSI-RS resource set (NZP-CSI-RS-ResourceSet-r17) includes an NZP-CSI-RS resource list (NZP-CSI-RS-ResourcesList-r17). The NZP-CSI-RS resource list indicates one or more groups of NZP-CSI-RS resources (nzp-CSI-RS-Resources). The group includes one or more NZP-CSI-RS resource IDs (NZP-CSI-RS-ResourceId).

In an example of FIG. 14B, the NZP-CSI-RS resource set includes an NZP-CSI-RS resource group list (NZP-CSI-RS-ResourceGroupList). The NZP-CSI-RS resource group list includes one or more NZP-CSI-RS resource groups (NZP-CSI-RS-ResourcesGroup). The NZP-CSI-RS resource group includes one or more NZP-CSI-RS resource IDs (NZP-CSI-RS-ResourceId).

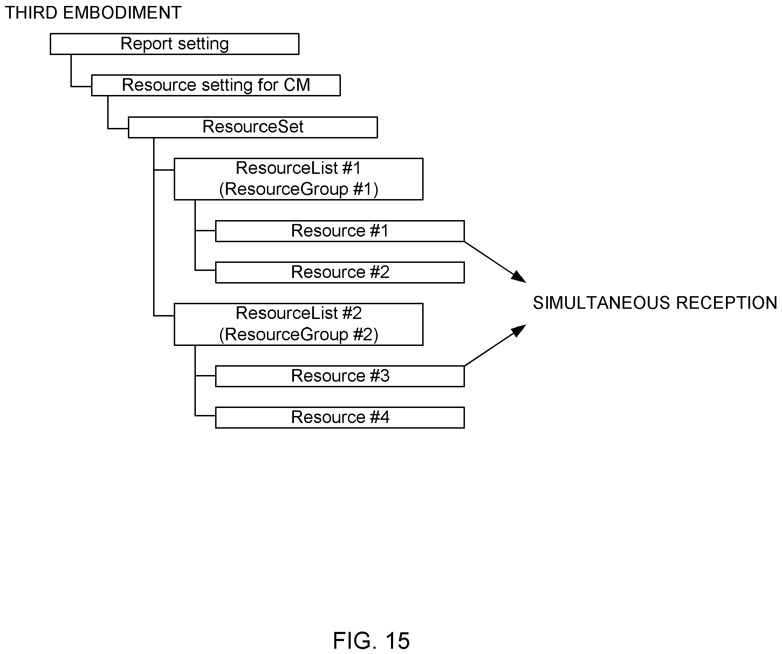

In an example of FIG. 15, the report setting includes one channel measurement resource setting. The channel measurement resource setting includes a resource set. The resource set includes resource list (resource group) #1 and resource list (resource group) #2. Resource list #1 includes resource #1 and resource #2, and resource list #2 includes resource #3 and resource #4. The UE may simultaneously receive resource #1 and resource #3.

According to a third embodiment described above, the UE can appropriately perform measurement/reporting by using a plurality of UE panels corresponding to a plurality of resource groups.

### <<Variations>>

When a plurality of resource settings are configured for one same report setting, a plurality of resources in one same resource group may be simultaneously received by the UE.

### <Fourth Embodiment>

Interference measurement resources (IMRs) may be configured on the basis of at least one of the first to third embodiments.

The interference measurement resources may follow at least one of the following configuration 4-1 and configuration 4-2.

### <<Configuration 4-1>>

At least one of the first to third embodiments may be employed in the interference measurement resources. In other words, a plurality of resource settings/resource sets/resource groups for interference measurement may be configured.

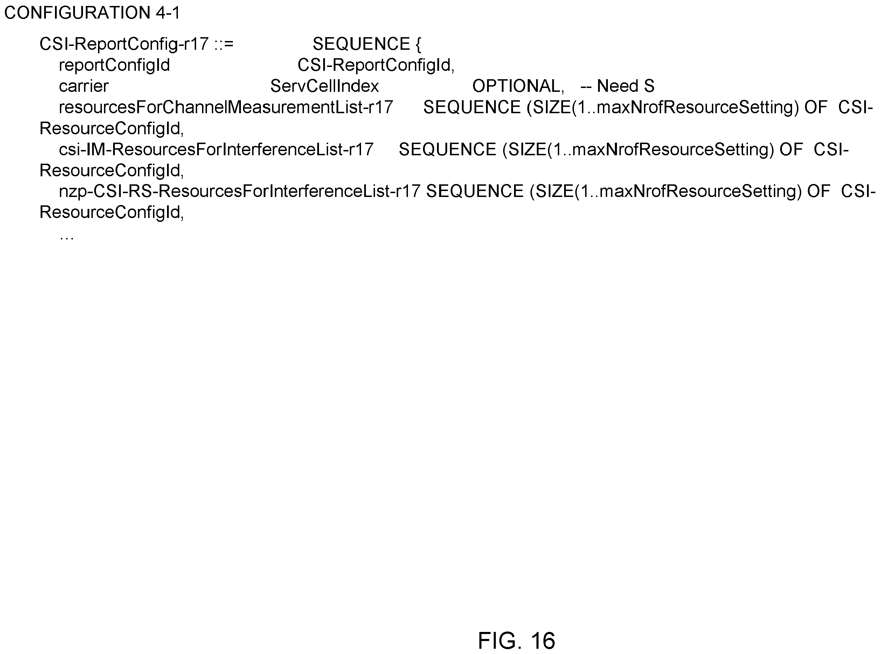

In an example of FIG. 16, CSI report configuration (CSI-ReportConfig-r17) may include at least one of a channel measurement resource list (resourcesForChannelMeasurementList-r17), an interference measurement CSI-IM resource list (csi-IM-ResourcesForInterferenceList-r17), and an interference measurement NZP-CSI-RS resource list (nzp-CSI-RS-ResourcesForInterferenceList-r17). Each of the channel measurement resource list, the interference measurement CSI-IM resource list, and the interference measurement NZP-CSI-RS resource list may include one or more CSI resource configuration IDs (CSI-ResourceConfigId) .

An association between each CMR and each IMR may be explicitly configured, or may be implicitly associated in ascending order of indices in each list.

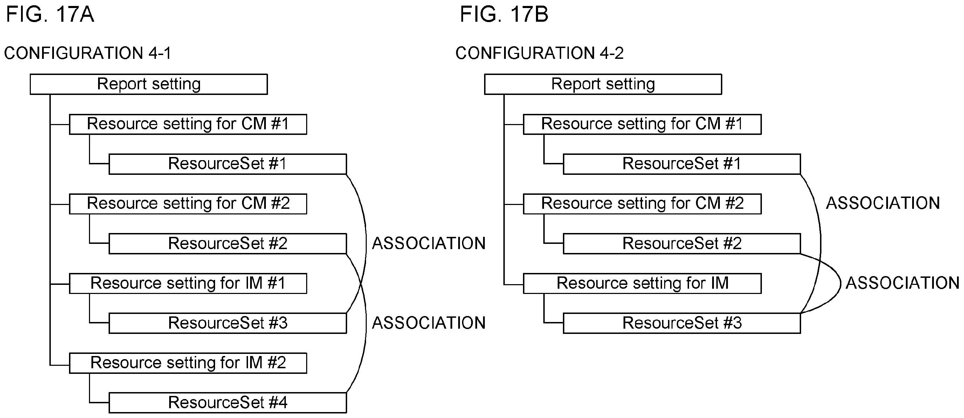

In an example of FIG. 17A, a report setting includes channel measurement resource setting #1, channel measurement resource setting #2, interference measurement resource setting #1, and interference measurement resource setting #2. Channel measurement resource setting #1 includes resource set #1, channel measurement resource setting #2 includes resource set #2, interference measurement resource setting #1 includes resource set #3, and interference measurement resource setting #2 includes resource set #4. Resource set #1 and resource set #3 corresponding to the same resource setting index are associated with each other, and resource set #2 and resource set #4 corresponding to the same resource setting index are associated with each other.

### <<Configuration 4-2>>

One resource setting/resource set/resource group for interference measurement may be configured (in a manner similar to that of interference measurement resources of Rel. 16). One resource setting/resource set/resource group for interference measurement may be associated with a plurality of resource settings/resource sets/resource groups for channel measurement (of at least one of the first to third embodiments).

For L1-SINR measurement using channel measurement resource setting/resource set/resource group #i, a UE may apply, to measurement in interference measurement resources associated with the L1-SINR measurement, a QCL type D of resources in channel measurement resource setting/resource set/resource group #i.

In an example of FIG. 17B, the report setting includes channel measurement resource setting #1, channel measurement resource setting #2, and interference measurement resource setting. Channel measurement resource setting #1 includes resource set #1, channel measurement resource setting #2 includes resource set #2, and the interference measurement resource setting includes resource set #3. Interference measurement resource set #3 is associated with channel measurement resource set #1 and channel measurement resource set #2.

At least one of NZP-CSI-RS resources, CSI-IM resources, and ZP-CSI-RS resources may be regarded as CMRs or IMRs.

For configuration 4-1, if one resource out of resources for channel measurement and for interference measurement is configured, and the configured resource is an NZP-CSI-RS or an SSB, a non-configured resource out of the resources for channel measurement and for interference measurement may be (implicitly) derived by an associated index of the configured resource.

For configuration 4-2, if one resource out of resources for channel measurement and for interference measurement is not configured, the non-configured resource out of the resources for channel measurement and for interference measurement may be (implicitly) derived by a configured resource or SSB out of the resources for channel measurement and for interference measurement.

According to a fourth embodiment described above, the UE can perform interference measurement by using at least one of a plurality of UE panels.

### <Fifth Embodiment>

A UE may report a UE capability related to at least one of the first to fourth embodiments.

The UE capability may indicate whether a plurality of resource settings can be configured in each report setting (the first embodiment is supported).

The UE capability may indicate whether a plurality of resource sets can be configured in each report setting for a P/SP resource type (the second embodiment (configuration 2-2a) is supported).

The UE capability may indicate whether a plurality of resource sets can be associated with one report setting for an AP resource type (the second embodiment (configuration 2-2b) is supported).

The UE capability may indicate whether a plurality of resource groups can be configured for each resource set (the third embodiment is supported).

Any one of these UE capabilities may indicate whether the number of resource settings/resource sets/resource groups can be configured.

With respect to a function of at least one of the first to fourth embodiments, the UE may employ the function in at least one of a case where the UE has reported a UE capability corresponding to the function and a case where a higher layer parameter corresponding to the function has been configured/updated/activated for the UE, otherwise the UE may not employ the function.

According to a fifth embodiment described above, it is possible to perform measurement/reporting by using a plurality of UE panels while maintaining compatibility with an existing UE.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

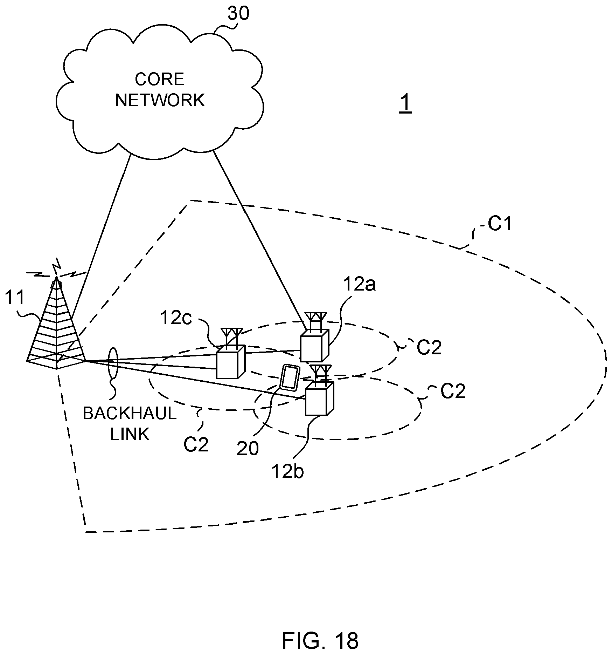

FIG. 18 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

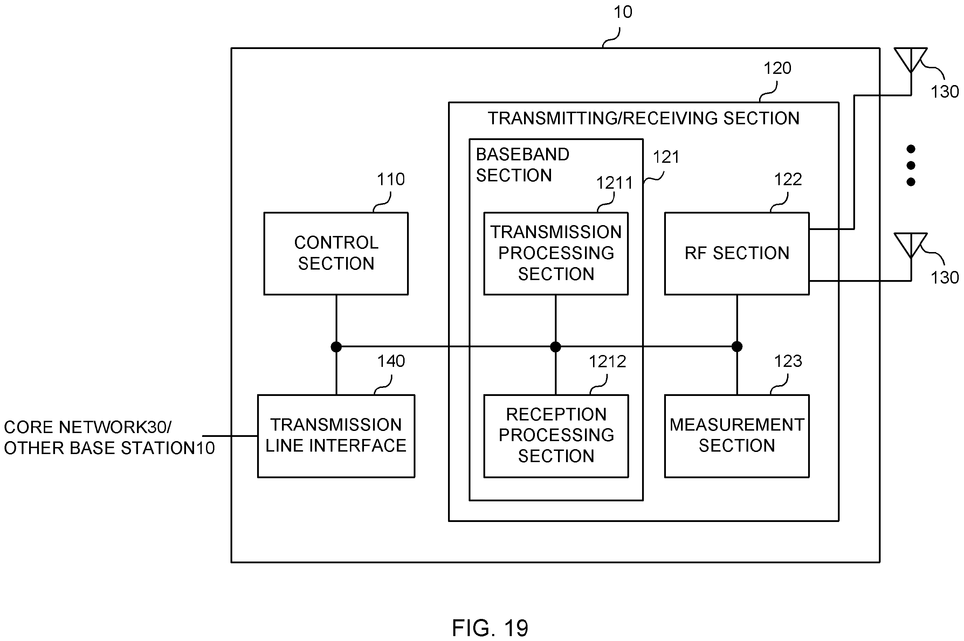

FIG. 19 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

A plurality of resources may be associated with a plurality of spatial domain filters, and the transmitting/receiving section 120 may transmit a report setting associated with the plurality of resources. The control section 110 may control reception of a report of measurement in the plurality of resources.

A plurality of channel measurement resources may be associated with a plurality of spatial domain filters, and the transmitting/receiving section 120 may transmit a report setting associated with the plurality of channel measurement resources and one or more interference measurement resources. The control section 110 may control reception of a report of measurement in the plurality of channel measurement resources and the one or more interference measurement resources.

### (User Terminal)

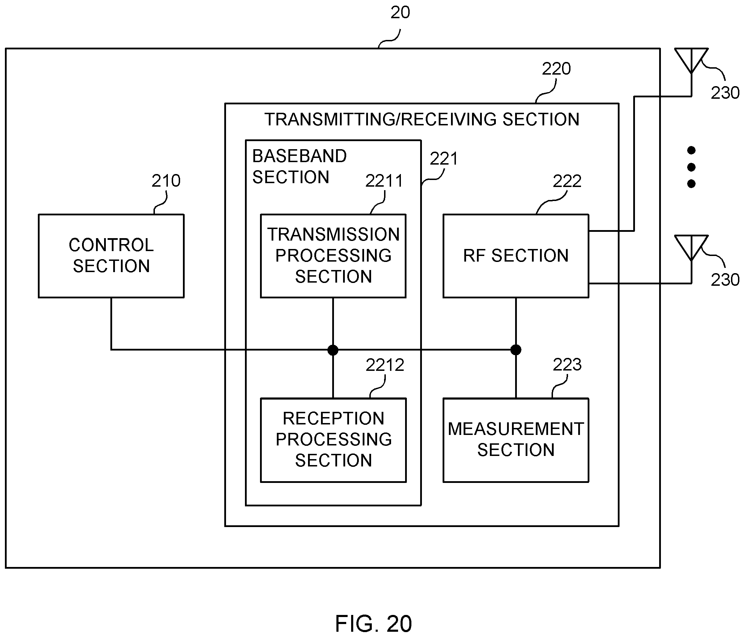

FIG. 20 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

A plurality of resources may be associated with a plurality of spatial domain filters, and the transmitting/receiving section 220 may receive a report setting associated with the plurality of resources. The control section 210 may perform measurement in the plurality of resources.

The report setting may be associated with a plurality of resource settings, and the plurality of resources may be associated with the plurality of resource settings.

The report setting may be associated with a plurality of resource sets, and the plurality of resources may be associated with the plurality of resource sets.

The report setting may be associated with a plurality of resource groups, the plurality of resource groups may be included in one resource set, and the plurality of resources may be associated with the plurality of resource groups.

A plurality of channel measurement resources may be associated with a plurality of spatial domain filters, and a report setting associated with the plurality of channel measurement resources and one or more interference measurement resources may be received. The control section 210 may perform measurement in the plurality of channel measurement resources and the one or more interference measurement resources.

The one or more interference measurement resources may be a plurality of interference measurement resources, and the plurality of interference measurement resources may be associated with the plurality of channel measurement resources.

The plurality of interference measurement resources may be associated with the plurality of spatial domain filters.

The one or more interference measurement resources may be one interference measurement resource, and the one interference measurement resource may be associated with the plurality of channel measurement resources.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

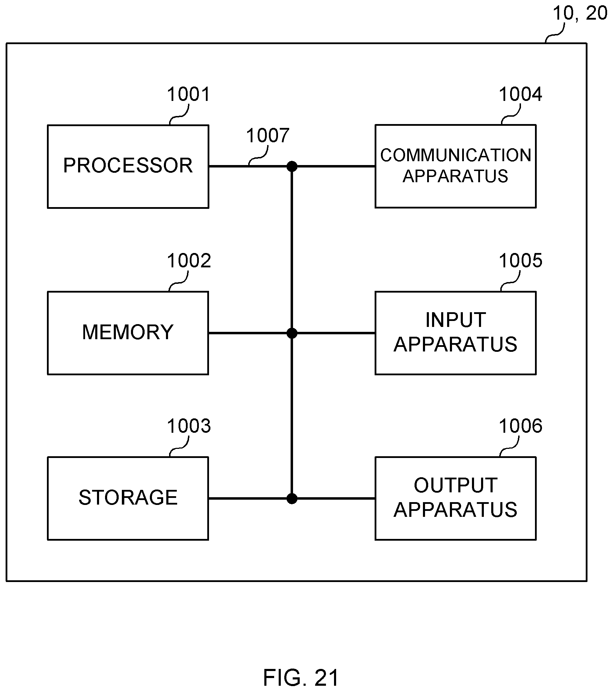

For example, a base station, a user terminal, and so on according to one embodiment of the present disclosure may function as a computer that executes the processes of the radio communication method of the present disclosure. FIG. 21 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a report setting associated with a plurality of channel measurement resources and one or more interference measurement resources, the plurality of channel measurement resources being associated with a plurality of spatial domain filters; and
a control section that performs measurement in the plurality of channel measurement resources and the one or more interference measurement resources.

2. The terminal according to claim 1, wherein
the one or more interference measurement resources are a plurality of interference measurement resources, and
the plurality of interference measurement resources are associated with the plurality of channel measurement resources.

3. The terminal according to claim 2, wherein
the plurality of interference measurement resources are associated with the plurality of spatial domain filters.

4. The terminal according to claim 1, wherein
the one or more interference measurement resources are one interference measurement resource, and
the one interference measurement resource is associated with the plurality of channel measurement resources.

5. A radio communication method for a terminal, the radio communication method comprising:
receiving a report setting associated with a plurality of channel measurement resources and one or more interference measurement resources, the plurality of channel measurement resources being associated with a plurality of spatial domain filters; and
performing measurement in the plurality of channel measurement resources and the one or more interference measurement resources.

6. A base station comprising:
a transmitting section that transmits a report setting associated with a plurality of channel measurement resources and one or more interference measurement resources, the plurality of channel measurement resources each being associated with a plurality of spatial domain filters; and
a control section that controls reception of a report of measurement in the plurality of channel measurement resources and the one or more interference measurement resources.
